# EUROPÄISCHE PATENTANMELDUNG

(11) **EP 1 870 324 A2**
(43) Veröffentlichungstag der Anmeldung: **26.12.2007**
(21) Anmeldenummer: 07005796.3
(22) Anmeldetag: 21.03.2007
(51) Int. Cl.: B62D 55/30

(54) **Kettenfahrwerk**

(30) Priorität: 23.06.2006 DE 202006009862 U
(71) Anmelder: Liebherr-Werk Nenzing GmbH, 6710 Nenzing (AT)
(72) Erfinder: Streitz, Hr., 6713 Ludesch (AT)
(74) Vertreter: Laufhütte, Dieter

(57) **Zusammenfassung**

Kettenfahrwerk mit zwei Antriebseinheiten (2,12) pro Kette (3,13), wobei mindestens eine der Antriebseinheiten gegen den Fahrwerksrahmen linear verschiebbar und vorspannbar ist.

## Beschreibung

Die vorliegende Erfindung betrifft ein Kettenfahrwerk mit zwei Antriebseinheiten pro Kette. Solche Kettenfahrwerke mit zwei Antriebseinheiten pro Kette kommen insbesondere bei Raupenkränen zum Einsatz, welche Traglasten bewegen sollen, die bei Einsatz von nur einer Antriebseinheit pro Kette nicht mehr bewegt werden könnten.

Da beim Einsatz von zwei Antriebseinheiten pro Kette die übliche Kettenspannung durch ein vorgespanntes Leitrad nicht mehr möglich ist, weil anstelle des Leitrades die zweite Antriebseinheit angebracht wird, verzichtet man üblicherweise bei Kettenfahrwerken mit zwei Antriebseinheiten pro Kette auf eine permanente Vorspannung. Die Kette muß deshalb aufgrund des Verschleißes in gewissen Zeitintervallen durch Einlegen von Distanzblechen nachgespannt werden, was die Wartungskosten und Wartungszeiten erhöht.

Aufgabe der vorliegenden Erfindung ist es deshalb, ein Kettenfahrwerk mit zwei Antriebseinheiten pro Kette zur Verfügung zu stellen, bei welcher die Kette permanent vorgespannt ist.

Erfindungsgemäß wird diese Aufgabe von einem Kettenfahrwerk mit den Merkmalen des Anspruchs 1 gelöst. Hierzu ist mindestens eine der Antriebseinheiten gegen den Fahrwerksrahmen linear verschiebbar und vorspannbar.

Dabei wird die mindestens eine Antriebseinheit durch ihre Vorspannung linear gegen die Kette verschoben, so daß die Kette permanent vorgespannt ist. Hierdurch ergibt sich eine einfache und stabile Vorspannung der Kette, ohne daß irgendwelche Montageschritte nötig sind, um die Vorspannung der Kette zu erreichen. Hierdurch ist auf kostengünstige und stabile Art und Weise ein sicherer Antrieb der Kette zu jedem Zeitpunkt gewährleistet.

Vorteilhafterweise ist dabei die mindestens eine Antriebseinheit im wesentlichen in horizontaler Richtung linear verschiebbar, während sie sich durch die Anbringung am Fahrwerksrahmen in alle anderen Richtungen nicht bewegen kann. Die Bewegung der mindestens einen Antriebseinheit durch die Vorspannung gegen die Kette ist somit auf einfache Art und Weise möglich, wobei das Fahrzeuggewicht im wesentlichen auf der in vertikale Richtung nicht verschiebbaren Befestigung der mindestens einen Antriebseinheit lastet und somit die Vorspannung nicht erschwert.

Vorteilhafterweise ist die mindestens eine Antriebseinheit an einem gegen den Fahrwerksrahmen linear verschiebbaren und vorgespannten Tragelement befestigt. Dies hat insbesondere den Vorteil, daß als Antriebseinheit auf eine im wesentlichen bekannte Bauform zurückgegriffen werden kann, welche auf dem Tragelement befestigt wird. Nur dieses muß so ausgebildet sein, daß es linear verschiebbar und vorspannbar ist. Eine solche Lösung stellt eine einfache und preisgünstige Konstruktion dar, bei der insbesondere auf bereits bestehende Komponenten zurückgegriffen werden kann.

Vorteilhafterweise ist die mindestens eine Antriebseinheit asymmetrisch am Fahrwerksrahmen oder Tragelement montiert. Eine asymmetrische Montage der Antriebseinheit erlaubt es, den Turas montieren zu können, ohne daß die Antriebseinheit geteilt werden muß, was insbesondere Wartungs- und Reparaturkosten vermindert. Auch erleichtert die asymmetrische Anbringung die Montage und Wartung der Antriebseinheit selbst.

Eine solche asymmetrische Montage der Antriebseinheit erhöht zwar die Kräfte, welche auf die Verbindung zwischen Antriebseinheit und Fahrwerksrahmen einwirken, was jedoch durch die vorliegende Konstruktion mit einer lediglich linear verschiebbaren Antriebseinheit und insbesondere mit einer Antriebseinheit, welche an einem linear verschiebbaren Tragelement montiert ist, aufgefangen wird, so daß sich eine sichere, stabile und dennoch vorspannbare Konstruktion ergibt.

Weiterhin vorteilhafterweise sind beide Antriebseinheiten asymmetrisch montiert, so daß bei beiden Antriebseinheiten eine einfache Montage des Turas möglich ist.

Weiterhin vorteilhafterweise sind dabei beide Antriebseinheiten im wesentlichen identisch aufgebaut, was Entwicklungskosten spart und auch hinsichtlich von Ersatzteilen von großem Vorteil ist. Insbesondere in Kombination mit einem linear verschiebbaren und vorspannbaren Tragelement, an dem die mindestens eine Antriebseinheit befestigt ist, ergeben sich so erhebliche Kostenvorteile, da die Antriebseinheit nur einmal entwickelt werden muß bzw. auf eine bereits bekannte Antriebseinheit zurückgegriffen werden kann.

Vorteilhafterweise ist weiterhin die mindestens eine Antriebseinheit von einem Hydraulikzylinder vorspannbar, wobei dies entweder direkt oder über ein Tragelement, auf dem Antriebseinheit montiert ist, geschehen kann. Die hydraulische Vorspannung der Antriebseinheit und damit der Kette ist eine einfache und kostengünstige Möglichkeit, die Kette gezielt vorzuspannen, da der Hydraulikzylinder zum Spannen der Kette lediglich mit der Druckversorgung des Fahrzeugs verbunden werden muß und dann über ein Ventil steuerbar ist.

Vorteilhafterweise umfaßt dabei das Tragelement, auf welchem die mindestens eine Antriebseinheit montiert ist und welches linear verschiebbar und vorspannbar ist, eine Trägerplatte.

An diese Trägerplatte kann die Antriebseinheit zum Beispiel angeflanscht werden, wobei die Trägerplatte vorteilhafterweise senkrecht auf der Achse der Antriebseinheit steht. Hierdurch ergibt sich eine besonders einfache Montage der Antriebseinheit, wobei die Trägerplatte so am Fahrwerksrahmen angebracht ist, daß sie linear verschiebbar ist, und dabei insbesondere in eine horizontale Richtung linear verschiebbar, in alle anderen Richtungen aber fest vom Fahrwerksrahmen gehalten wird.

Vorteilhafterweise ist die Antriebseinheit dabei linear in einer Führung gegen den Fahrwerksrahmen verschiebbar. Weiterhin vorteilhafterweise ist diese Führung in horizontaler Richtung angeordnet, so daß die Antriebseinheit bzw. das Tragelement, an dem die Antriebseinheit montiert ist, in diese Richtung linear verschiebbar ist, aber ansonsten von der Führung gehalten wird. Dies hat wiederum den Vorteil, daß das Gewicht des Fahrzeugs im wesentlichen von der Führung getragen wird, während linear zur Führung lediglich die Vorspannkräfte wirken.

Vorteilhafterweise besteht dabei die Führung aus mit dem Fahrwerksrahmen verbundenen überkragenden Elementen, welche in eine Nut der Antriebseinheit oder des Tragelements eingreifen. Dies ermöglicht eine sichere und zuverlässige Befestigung der Antriebseinheit, ohne die Verschiebbarkeit entlang der Nut zu beeinträchtigen.

Ebenso gut ist es aber möglich, daß die Führung aus einem Fahrwerksrahmen angeordneten Nut besteht, in welche eine Kante der Antriebseinheit oder des Tragelements eingreift, woraus sich im wesentlichen die gleichen Vorteile ergeben.

Vorteilhafterweise werden dabei die Seitenwände der Nut von zwei miteinander verschraubten Platten gebildet, wodurch sich die Antriebseinheit bzw. das Tragelement leicht am Fahrwerksrahmen montieren bzw. von diesen abmontieren lassen.

Vorteilhafterweise ist das Tragelement ein austeleskopierbarer Träger. Der austeleskopierbare Träger bildet dabei vorteilhafterweise einen Teil der Fahrwerksrahmenkonstruktion und ist aus dem restlichen Fahrwerksrahmen austeleskopierbar und über einen Hydrozylinder gegen diesen vorspannbar. So läßt sich eine besonders stabile Konstruktion einfach realisieren.

Vorteilhafterweise ist dabei die mindestens eine Antriebseinheit exzentrisch an dem austeleskopierbaren Träger angeschraubt. So lässt sich der Turas einfach auf die Antriebseinheit montieren.

Die Antriebseinheiten sind dabei vorteilhafterweise hydraulische Antriebe mit integriertem Getriebe, welche eine kompakte und stabile Baueinheit bilden, die separat montiert und lediglich an die Druckversorgung des Fahrzeugs angeschlossen werden muß.

Ausführungsbeispiele der vorliegenden Erfindung werden nun anhand von Zeichnungen näher beschrieben.

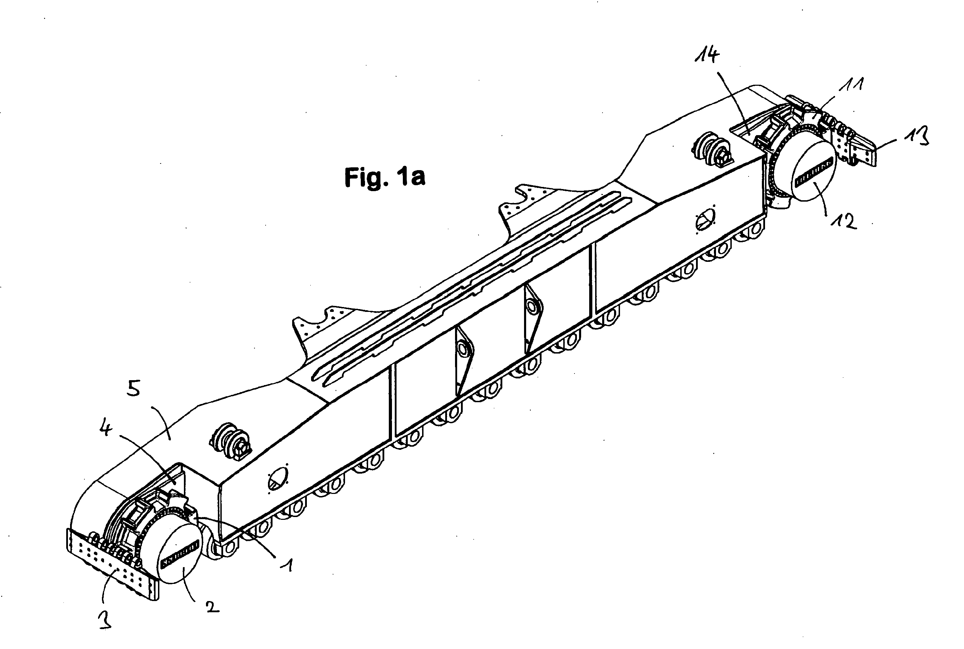

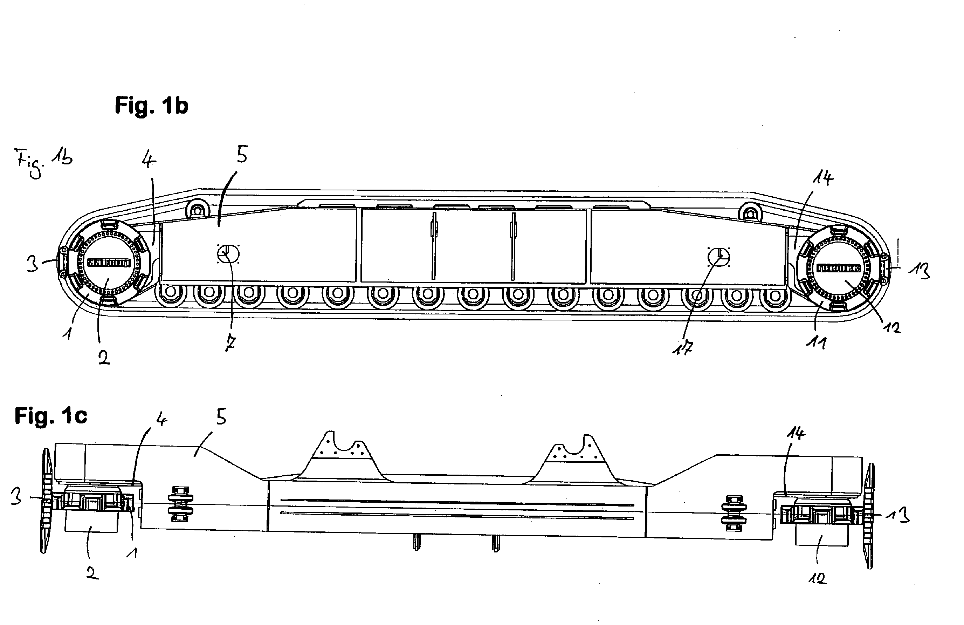

Dabei zeigt
- Fig. 1 a: eine perspektivische Ansicht eines ersten Ausführungsbeispiels der vorliegenden Erfindung,
- Fig. 1b: eine Draufsicht des ersten Ausführungsbeispiels der vorliegenden Erfindung,
- Fig. 1 c: eine Seitenansicht des ersten Ausführungsbeispiels der vorliegenden Erfindung,
- Fig. 2: eine vergrößerte perspektivische Ansicht des ersten Ausführungsbeispiels der vorliegenden Erfindung,
- Fig. 3: eine vergrößerte Schnittansicht des ersten Ausführungsbeispiels der vorliegenden Erfindung im wesentlichen längs der Achse der Antriebseinheit,
- Fig. 4: eine vergrößerte Schnittansicht des ersten Ausführungsbeispiels der vorliegenden Erfindung quer zur Achse der Antriebseinheit,
- Fig. 5: eine weitere vergrößerte Schnittansicht des Ausführungsbeispiels der vorliegenden Erfindung quer zur Achse der Antriebseinheit.
- Fig. 6: eine perspektivische Ansicht eines zweiten Ausführungsbeispiels der vorliegenden Erfindung.

Fig. 1a zeigt ein erstes Ausführungsbeispiel des erfindungsgemäßen Kettenfahrwerks in perspektivischer Ansicht. Das Kettenfahrwerk umfasst zwei Antriebseinheiten 2 und 12, welche die lediglich anhand der Kettenglieder 3 und 13 angedeutete Kette antreiben. Zum Spannen der Kette sind die Antriebseinheiten 2 und 12 im ersten Ausführungsbeispiel beide gegen den Fahrwerksrahmen 5 linear verschiebbar und vorspannbar. Hierzu sind die Antriebseinheiten 2 und 12 asymmetrisch auf Trägerplatten 4 und 14, welche gegen den Fahrwerksrahmen horizontal verschiebbar sind, angeflanscht. Die asymmetrische Anordnung der Antriebseinheiten 2 und 12 erlaubt es, den Turas 1 und 11 ohne einen Ausbau der Antriebseinheiten 2 und 12 zu montieren.

Fig. 1 b zeigt eine Seitenansicht des ersten Ausführungsbeispiels. Dabei sind insbesondere die Trägerplatten 4 und 14 zu erkennen, welche gegen den Fahrwerksrahmen 5 linear verschiebbar und vorspannbar sind und auf welchen die Antriebseinheiten 2 und 12 montiert sind. Durch Aussparungen im Fahrwerksrahmen 5 sind Teile der Hydrozylinder 7 und 17 zu erkennen, welche die Trägerplatten 4 und 14 gegen die Kette vorspannen.

Fig. 1 c zeigt eine Draufsicht des ersten Ausführungsbeispiels, auf welche insbesondere die asymmetrische Anordnung der Antriebseinheiten 2 und 12 deutlich wird.

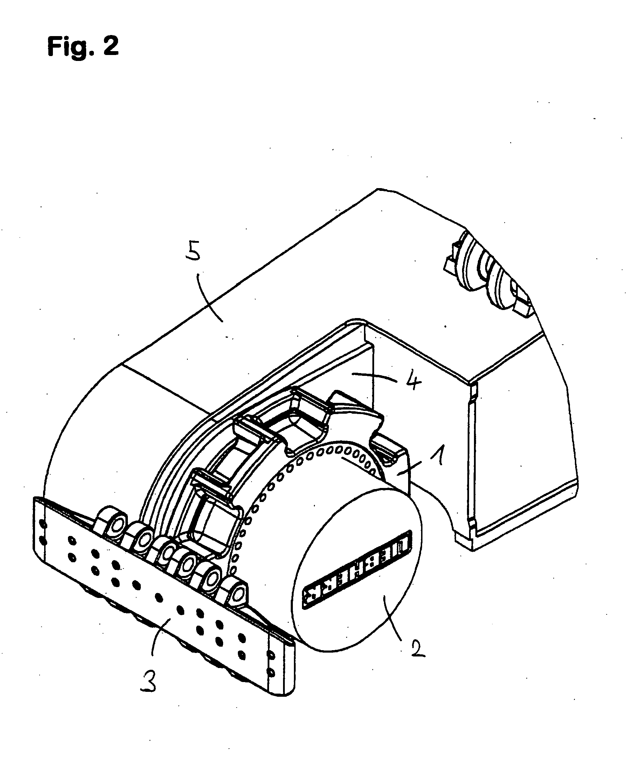

Fig. 2 zeigt eine vergrößerte Ansicht der Antriebseinheit 2 des ersten Ausführungsbeispiels, welche gegen den Fahrwerksrahmen linear verschiebbar und vorspannbar ist. Die Antriebseinheit 2 ist auf einer Trägerplatte 4 montiert, welche wiederum horizontal linear verschiebbar am Fahrwerksrahmen 5 befestigt ist. Durch die Vorspannung dieser Trägerplatte 4 gegen den Fahrwerksrahmen 5 wird die an der Trägerplatte 4 montierte Antriebseinheit 2 nach außen gegen die Kette 3 gedrückt und spannt diese so permanent.

Die Antriebseinheit 2 umfaßt dabei einem Hydraulikmotor und ein integriertes Getriebe, auf dem der Turas 1 direkt angebracht ist. Die Antriebseinheit 2 ist asymmetrisch am Fahrwerksrahmen 5 angeordnet. Dies hat insbesondere den Vorteil, daß der Turas 1 gewechselt werden kann, ohne daß die Antriebseinheit 2 ausgebaut oder zerlegt werden müßte. Hierzu müssen lediglich die Schrauben, mit denen der Turas am Getriebe angeflanscht ist, gelöst werden, so daß der Turas seitlich abgezogen werden kann. Weiterhin ist ein Kettenglied 3 gezeigt, welches vom Turas 1 bewegt wird.

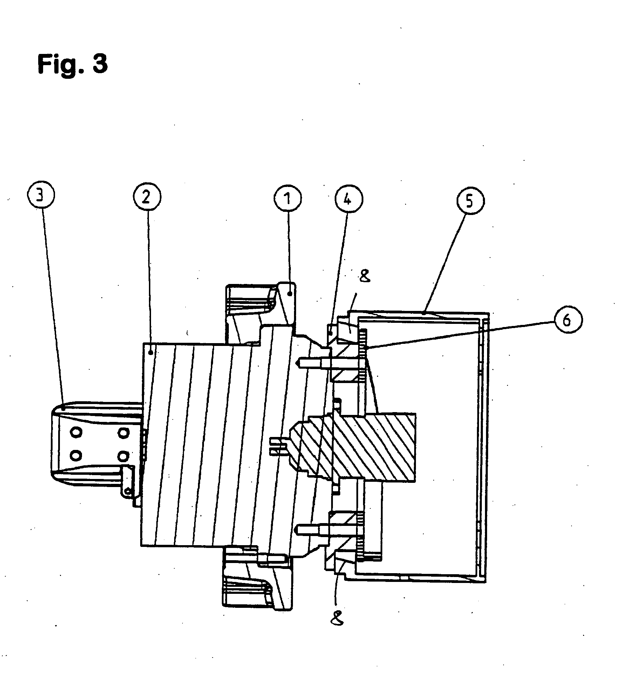

Aus Fig. 3 wird ersichtlich, wie die Trägerplatte 4 linear verschiebbar am Fahrzeugrahmen 5 angebracht ist. Hierzu weist der Fahrwerksrahmen 5 überkragende Kanten 8 auf, welche in eine Nut eingreifen, die sich zwischen der Trägerplatte 4 und einer Innenplatte 6 ergibt. Eine Seitenfläche sowie die Unterseite der Nut werden dabei von einer Aussparung in der Trägerplatte 4 gebildet, während die andere Seitenfläche der Nut von der Innenplatte 6 gebildet wird. Hierdurch kann die Antriebseinheit 2 einerseits sehr einfach montiert werden. Hierzu wird sie sowohl mit der Innenplatte 6 und der Trägerplatte 4 verschraubt, wodurch die überkragenden Kanten 8 des Fahrzeugsrahmens in der Nut eingreifen. Hierdurch ist die Antriebseinheit sicher und stabil am Fahrwerksrahmen montiert ist, da die Verbindung zwischen Fahrzeugrahmen 5 und Antriebseinheit 3 über die überkragenden Kanten 8 und die Nut zwischen Trägerplatte 4 und Innenplatte 6 das gesamte Gewicht des Fahrzeugs trägt. Andererseits ist die Trägerplatte und die daran montierte Antriebseinheit 3 entlang der Nut verschiebbar und kann so nach außen hin gegen die Kette vorgespannt werden.

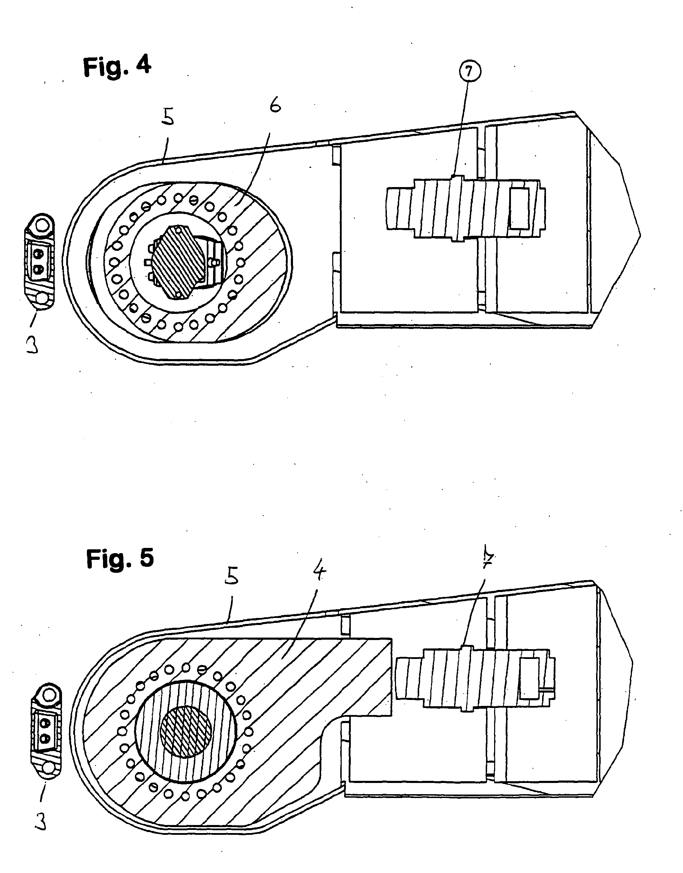

Fig. 4 und 5 zeigen Schnittansichten quer zur Antriebsachse der Antriebseinheit 3, aus welcher dies klar ersichtlich ist. In Fig. 4 ist dabei insbesondere die Innenplatte 6 zu erkennen, welche hinter den übertragenden Rändern des Fahrwerkrahmens 5 angeordnet ist. Die Innenplatte 6 sichert damit die Trägerplatte und die Antriebseinheit 3 am Fahrzeugrahmen 5.
Die Innenplatte 6 weist dabei eine große runde Aussparung auf, um mehr Platz für die Antriebseinheit 3 zur Verfügung zu stellen. Die Antriebseinheit 3 kann einfach montiert werden, indem sie über die rund um die Aussparung in der Innenplatte 6 angeordneten Bohrungen mit der Trägerplatte 4 und der Antriebseinheit 3 verschraubt wird.

In Fig. 5 ist die Trägerplatte 4 zu erkennen, welche mit der Innenplatte 6 der Antriebseinheit verschraubt ist. Auch die Trägerplatte 4 weist wie die Innenplatte 6 eine große runde Aussparung auf, um mehr Platz für die Antriebseinheit 3 zur Verfügung zu stellen. Die Trägerplatte 4 weist dabei zusätzlich ein nach rechts in den Fahrwerksrahmen hineinreichenden Fortsatz auf, welcher über einen Hydrozylinder 7, der am Fahrzeugrahmen fest montiert ist, vorgespannt werden kann. Der Hydrozylinder 7 drückt also die Trägerplatte 4 in der von den überkragenden Rändern des Fahrzeugrahmens 5 und der zwischen der Innenplatte 6 und der Trägerplatte 4 befindlichen Nut gebildeten Führung linear nach außen, so daß die Kette über die an der Trägerplatte 4 montierte Antriebseinheit 3 vorgespannt werden kann.

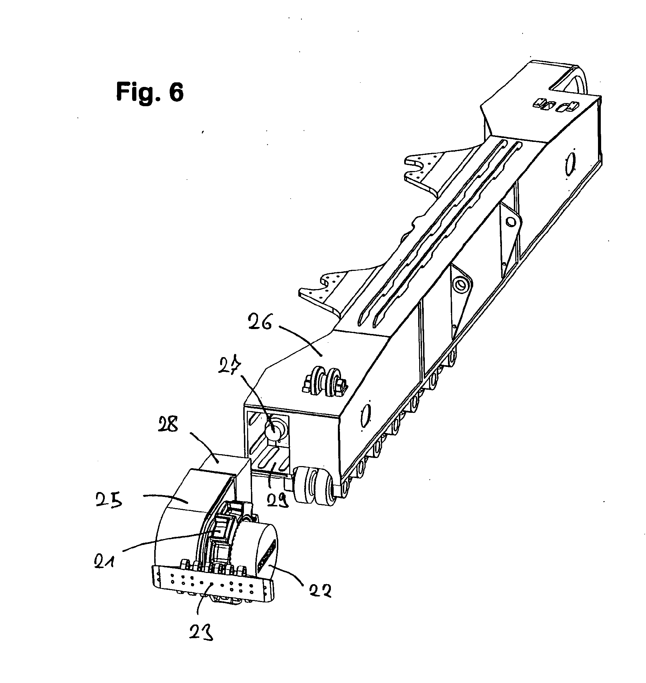

Figur 6 zeigt ein zweites Ausführungsbeispiel des erfindungsgemäßen Kettenfahrwerks. Hierbei ist die Antriebseinheit 22 an einem austeleskopierbaren Träger 25 montiert. Der Träger 25 bildet damit einen vorderen Teil der Fahrwerksrahmenkonstruktion, an welchem die Antriebseinheit 22 asymmetrisch angeordnet ist. Hierdurch lässt sich wiederum der Turas 21 einfacher montieren. Der Träger 25 verfügt über ein Teleskopelement 28, welches in einer entsprechenden Aufnahme 29 im Fahrwerksrahmen 26 linear verschiebbar geführt ist. Der Übersicht halber wurde in der vorliegenden perspektivischen Zeichnung der austeleskopierbare Träger mit dem Teleskopelement 28 komplett aus der Aufnahme 29 herausgezogen dargestellt. Während des Betriebes befindet sich das Teleskopelement 28 in der Aufnahme 29 und wird dort oben und unten sowie seitlich von dieser gehalten. Die Fürhung des Teleskopelements 28 in der Aufnahme 29 trägt damit das Gewicht des Fahrzeugs. Der Kolben des Hydrozylinders 27 ragt in die Aufnahme 29 hinein, so daß durch beaufschlagen des Hydrozylinders 27 mit Druck der Träger 28 austeleskopierbar und gegen die Kette 23 vorspannbar ist.

So ergibt sich auch im zweiten Ausführungsbeispiel eine stabile Fahrwerkskonstruktion, welche auch bei Verwendung von zwei Antriebseinheiten pro Kette ein automatisches Vorspannen der Kette erlaubt. Im zweiten Ausführungsbeispiel ist die zweite Antriebseinheit anders als im ersten Ausführungsbeispiel fest am Fahrwerksrahmen montiert, wobei in Figur 6 jedoch auf die Darstellung dieser zweiten fest montierten Antriebseinheit verzichtet wurde.

## Patentansprüche

1. Kettenfahrwerk mit zwei Antriebseinheiten pro Kette, wobei mindestens eine der Antriebseinheiten gegen den Fahrwerksrahmen linear verschiebbar und vorspannbar ist.

2. Kettenfahrwerk nach Anspruch 1, wobei die mindestens eine Antriebseinheit an einem gegen den Fahrwerksrahmen linear verschiebbaren und vorspannbaren Tragelement befestigt ist.

3. Kettenfahrwerk nach Anspruch 1 oder 2, wobei die mindestens eine Antriebseinheit asymmetrisch am Fahrwerksrahmen oder Tragelement montiert ist.

4. Kettenfahrwerk nach Anspruch 1 bis 3, wobei beide Antriebseinheiten asymmetrisch montiert sind.

5. Kettenfahrwerk nach einem der vorangegangenen Ansprüche, wobei beide Antriebseinheiten im wesentlichen identisch aufgebaut sind.

6. Kettenfahrwerk nach einem der vorangegangenen Ansprüche, wobei die mindestens eine Antriebseinheit von einem Hydraulikzylinder vorspannbar ist.

7. Kettenfahrwerk nach Anspruch 2, wobei das Tragelement eine Trägerplatte umfaßt.

8. Kettenfahrwerk einem der vorangegangenen Ansprüche, wobei die Antriebseinheit linear in einer Führung gegen den Fahrwerksrahmen verschiebbar ist.

9. Kettenfahrwerk nach Anspruch 8, wobei die Führung aus mit dem Fahrwerksrahmen verbundenen überkragenden Elementen besteht, welche in eine Nut der Antriebseinheit oder des Tragelements eingreifen.

10. Kettenfahrwerk nach Anspruch 8, wobei die Führung aus einer am Fahrwerksrahmen angeordneten Nut besteht, in welche eine Kante der Antriebseinheit oder des Tragelements eingreift.

11. Kettenfahrwerk nach Anspruch 9 oder 10, wobei die Seitenwände der Nut von zwei miteinander verschraubten Platten gebildet werden.

12. Kettenfahrwerk nach Anspruch 2, wobei das Tragelement einen austeleskopierbaren Träger umfasst.

13. Kettenfahrwerk nach Anspruch 12, wobei die mindestens eine Antriebseinheit exzentrisch an dem austeleskopierbaren Träger angeschraubt ist.
